# EUROPEAN PATENT APPLICATION

(11) **EP 4 699 912 A1**
(43) Date of publication of application: **25.02.2026**
(21) Application number: 24792041.6
(22) Date of filing: 17.04.2024
(51) Int. Cl.: B62D 35/00, B62D 37/02, B60R 19/48

(54) **AIR CURTAIN DEVICE, FRONT BUMPER, AND VEHICLE**

(30) Priority: 20.04.2023 CN 202320904717 U
(71) Applicant: Beijing Chehejia Automobile Technology Co., Ltd., Beijing 101300 (CN)
(72) Inventor: ZHANG, Weiran, Beijing 101300 (CN); LI, Muyao, Beijing 101300 (CN); NA, Jia, Beijing 101300 (CN); ZHANG, Xiaowei, Beijing 101300 (CN)
(74) Representative: Maiwald GmbH
(86) International application number: PCT/CN2024/088311
(87) International publication number: WO 2024/217456

(57) **Abstract**

The present disclosure relates to the technical field of vehicles, and in particular to an air curtain device, a front bumper, and a vehicle. The air curtain device provided by the present disclosure comprises an air curtain body arranged on two sides of a front bumper; a first channel, a second channel and a flow convergence channel are formed in the air curtain body; a first inlet and a first outlet are respectively provided on the two ends of the first channel; a second inlet and a second outlet are respectively provided on the two ends of the second channel; the flow convergence channel comprises a flow convergence inlet and a flow convergence outlet; the first outlet and the second outlet are both communicated with the flow convergence inlet; and an air curtain channel is formed between the first inlet and the flow convergence outlet and between the second inlet and the flow convergence outlet.

## Description

### CROSS-REFERENCE TO RELATED APPLICATION

This application is based on and claims priority to Chinese Patent Application No. 202320904717.3, filed on April 20, 2023, the content of which is incorporated herein by reference in its entirety.

### FIELD

The present disclosure relates to the technical field of vehicles, and in particular to an air curtain device, a front bumper, and a vehicle.

### BACKGROUND

With the vigorous development of vehicle industry, how to reduce the aerodynamic drag of the whole vehicle, save energy consumption, and meet consumers' demand for beautiful vehicle appearance has become a very important issue in vehicle development. When the vehicle speed is high, the aerodynamic drag is large, which will increase energy consumption and cost. The front bumper of the vehicle is a sensitive area of the aerodynamic drag of the whole vehicle and needs to be optimized.

In the related art, in order to reduce a positive pressure action zone of a front of the vehicle and guide the airflow to the outside area of the wheel as smoothly as possible, a single air curtain design is often adopted, that is, an air curtain channel with only one air inlet, which has a small opening area, and many grille bars or special air inlet shielding structure may be usually arranged at the air inlet. Constrained by styling and packaging space, these approaches increase structural complexity while simultaneously reducing the air intake area of the air curtain. This results in insufficient flow-guiding capacity, failing to guide airflow from the positive pressure zone to the outside of the wheel to the maximum extent, and thus offering limited effectiveness in reducing the drag coefficient.

### SUMMARY

In order to solve the above technical problems, the present disclosure provides an air curtain device, a front bumper, and a vehicle.

A first aspect of the present disclosure provides an air curtain device, arranged on two sides of a front bumper, including: an air curtain body, the air curtain body having a first channel, a second channel, and a flow convergence channel,
in which a first inlet and a first outlet are respectively arranged at two ends of the first channel;
a second inlet and a second outlet are respectively arranged at two ends of the second channel;
the flow convergence channel includes a flow convergence inlet and a flow convergence outlet, and the flow convergence channel is in communication with a wheel housing liner;
the first outlet and the second outlet are in communication with the flow convergence inlet; and
an air curtain channel is formed between the first inlet and the flow convergence outlet, and between the second inlet and the flow convergence outlet.

Further, the first outlet and the second outlet converge, and a cross-sectional area of the first channel gradually decreases along a direction from the first inlet to the first outlet; and
a cross-sectional area of the second channel gradually decreases along a direction from the second inlet to the second outlet.

Further, a length of the first channel is greater than a length of the second channel;
along a direction from the first inlet to the first outlet, a curvature radius of a cross section of the first channel gradually increases, and the curvature radius R1 of the cross section of the first channel satisfies: 234 mm ≤ R1 ≤ 916 mm; and
along a direction from the second inlet to the second outlet, a curvature radius of a cross section of the second channel gradually increases, and the curvature radius R2 of the cross section of the second channel satisfies: 545 mm ≤ R1 ≤ 711 mm.

Further, a sum of a cross-sectional area of the first inlet and a cross-sectional area of the second inlet is greater than a cross-sectional area of the flow convergence outlet.

Further, a cross-sectional area of the first inlet is greater than a cross-sectional area of the second inlet.

Further, a width W1 of the first inlet satisfies: 20 mm ≤ W1 ≤ 25 mm; a width W2 of the second inlet satisfies: 20 mm ≤ W2 ≤ 25 mm; the width of the first inlet is greater than the width of the second inlet; a width W3 of the flow convergence outlet satisfies: 25 mm ≤ W3 ≤ 30 mm;
a height H1 of the first channel satisfies: 130 mm ≤ H1 ≤ 160 mm; and a height H2 of the second channel satisfies: 130 mm ≤ H2 ≤ 160 mm.

Further, a gap is defined between the first outlet and the wheel housing liner, and a length L of the gap satisfies 4 mm ≤ L ≤ 10 mm.

A second aspect of the present disclosure provides a front bumper including the air curtain device of the first aspect.

Further, two air curtain devices are provided, and the two air curtain devices are symmetrically arranged with respect to a centerline of a vehicle body in a width direction; and
the first channel is arranged closer to the centerline than the second channel.

A third aspect of the present disclosure provides a vehicle including the front bumper of the second aspect.

Compared with the related art, the technical solution provided by embodiments of the present disclosure has the following advantages.

The air curtain device provided by embodiments of the present disclosure includes an air curtain body. The air curtain body has a first channel and a second channel. A first inlet and a first outlet are respectively arranged at two ends of the first channel. A second inlet and a second outlet are respectively arranged at two ends of the second channel. The flow convergence channel includes a flow convergence inlet and a flow convergence outlet. The first outlet and the second outlet are in communication with the flow convergence inlet; and an air curtain channel is formed between the first inlet and the flow convergence outlet, and between the second inlet and the flow convergence outlet. The air flow is guided through the first channel and the second channel to be discharged from the wheel housing liner of the front wheel of the vehicle, to reduce aerodynamic drag. Embodiments of the present disclosure may fully ensure the utilization rate of airflow from the head-on wind of the front bumper, guide the positive pressure airflow of the front bumper of the vehicle to the outside of the front wheel to the maximum extent through the first channel and the second channel, optimize the pressure difference, reduce the airflow separation on two sides of the front bumper and disperse the turbulent air on two sides of the wheel to a greater extent, reducing the drag coefficient and improving the power economy. The first inlet may be located in a front area of the front bumper, and the second inlet may be located in a side area of the front bumper, and the airflow is guided to the flow convergence channel through the first channel and the second channel extending through two sides of a front compartment, and finally discharged from a wheel housing liner of the front wheel of the vehicle, to reduce aerodynamic drag. Since the air curtain body has the first channel, the second channel and the flow convergence channel, the positive pressure zone of the head-on wind at the front of the vehicle and the airflow separation on two sides of the front bumper are substantially reduced, and the airflow velocity at the second outlet is increased, which may significantly disperse the turbulent air near the tires, effectively optimizing the aerodynamic drag of the whole vehicle during road travel and improving the power economy.

### BRIEF DESCRIPTION OF THE DRAWINGS

FIG. 1 is a partial schematic view of a vehicle according to an embodiment of the present disclosure.
FIG. 2 is a schematic diagram of an air curtain device according to an embodiment of the present disclosure.
FIG. 3 is a schematic sectional view of an air curtain device according to an embodiment of the present disclosure.
FIG. 4 is another schematic diagram of an air curtain device according to an embodiment of the present disclosure.

Reference numerals: 1, first channel; 11, first inlet; 12, first outlet; 2, a second channel; 21, second inlet; 22, second outlet; 3, wheel housing liner; 4, front bumper; 5, flow convergence channel; 52, flow convergence outlet.

### DETAILED DESCRIPTION

In order to more clearly understand the above-described objectives, features and advantages of the present disclosure, aspects of the present disclosure will be further described below. It should be noted that the embodiments in the present disclosure and the features in the embodiments may be combined with each other without conflict.

Numerous specific details are set forth in the following description to facilitate adequate understanding of the present disclosure. However, the present disclosure may also be implemented in other ways than those described herein. Obviously, the embodiments in the specification are only some embodiments of the present disclosure, but not all embodiments.

Aerodynamics: The study of the force characteristics, the gas flow rules, and accompanying physical and chemical changes when an object moves relative to the air.

Power performance and fuel economy, collectively referred to as power economy for short. The power performance refers to the average travel speed that the vehicle may achieve when driving straight on a good road surface, which is determined by the longitudinal external force acting on the vehicle. The fuel economy refers to the ability of the vehicle to drive with the minimum possible fuel consumption on the basis of ensuring power performance, typically measured by the fuel consumption per 100 kilometers traveled by the vehicle under certain operating conditions, or the distance traveled by the vehicle with a given amount of fuel consumption.

Drag coefficient: The drag coefficient is a mathematical parameter determined through wind tunnel test and coasting test, which may be used to calculate the air resistance of the vehicle during travel.

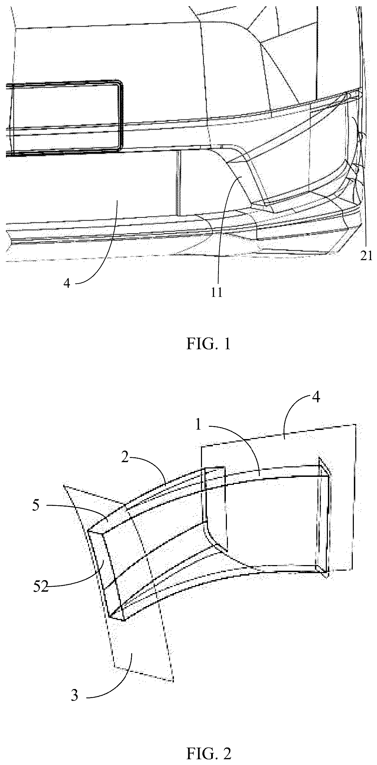

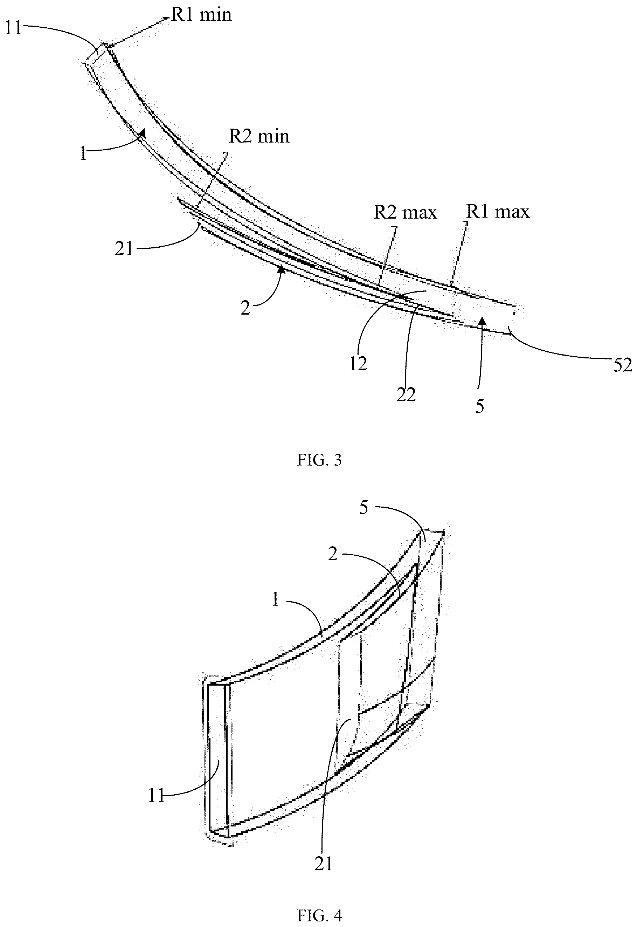

FIG. 1 is a partial schematic diagram of a vehicle according to an embodiment of the present disclosure. FIG. 2 is a schematic diagram of an air curtain device according to an embodiment of the present disclosure. FIG. 3 is a schematic sectional view of an air curtain device according to an embodiment of the present disclosure. FIG. 4 is another schematic diagram of an air curtain device according to an embodiment of the present disclosure. As illustrated in FIG. 1, FIG. 2, FIG. 3, and FIG. 4, an air curtain device provided by embodiments of the present disclosure includes an air curtain body, and the air curtain body has a first channel 1, a second channel 2, and a flow convergence channel 5. A first inlet 11 and a first outlet 12 are respectively arranged at two ends of the first channel 1. A second inlet 21 and a second outlet 22 are respectively arranged at two ends of the second channel 2. The flow convergence channel 5 includes a flow convergence inlet and a flow convergence outlet 52, and the first outlet 12 and the second outlet 22 are in communication with the flow convergence inlet. An air curtain channel is formed between the first inlet 11 and the flow convergence outlet 52, and between the second inlet 21 and the flow convergence outlet 52. The air curtain channel includes a first air curtain channel and a second air curtain channel, the first air curtain channel includes the first channel 1 and the flow convergence channel 5, and the second air curtain channel includes the second channel 2 and the flow convergence channel 5. The airflow is guided through the first channel 1 and the second channel 2 to the flow convergence channel 5 and ultimately to be discharged from the wheel housing liner 3 of the front wheel of the vehicle, which may play a role in reducing the aerodynamic drag. The air curtain device according to embodiments of the present disclosure may fully ensure the utilization rate of airflow from the head-on wind of the front bumper, guide the positive pressure airflow of the front bumper 4 of the vehicle to the outside of the front wheel to the maximum extent through the first channel 1 and the second channel 2, optimize the pressure difference, reduce the airflow separation on two sides of the front bumper 4 and disperse the turbulent air on two sides of the wheel to a greater extent, reducing the drag coefficient and improving the power economy. The first inlet 11 may be located in a front area of the front bumper 4, and the second inlet 21 may be located in a side area of the front bumper 4, and the airflow is guided to the flow convergence channel 5 through the first channel 1 and the second channel 2 extending through two sides of a front compartment, and finally discharged from a wheel housing liner 3 of the front wheel of the vehicle, playing a role in reducing aerodynamic drag. Since the air curtain body has the first channel 1 and the second channel 2, the positive pressure zone of the head-on wind at the front of the vehicle and the airflow separation on two sides of the front bumper 4 are substantially reduced, and the airflow velocity at the second outlet 22 is increased, which may significantly disperse the turbulent air near the tires, effectively optimizing the aerodynamic drag of the whole vehicle during road travel and improving the power economy.

In some specific implementations, the first outlet 12 and the second outlet 22 converge, and a cross-sectional area of the first channel 1 gradually decreases along a direction from the first inlet 11 to the first outlet 12, and a cross-sectional area of the second channel 2 gradually decreases along a direction from the second inlet 21 to the second outlet 22, so that the first channel 1 and the second channel 2 are horn shaped, the gas flow rate at the first outlet 12 is greater than the gas flow rate at the first inlet 11, and the gas flow rate at the second outlet 22 is greater than the gas flow rate at the second inlet 21, which may prevent the gas from flowing back at the outlet or forming an airflow vortex, and enable improved flow-guiding effect of the air curtain device. Since an area of the first inlet 11 is greater than an area of the first outlet 12, and at the same time, an area of the second inlet 21 is greater than an area of the second outlet 22, which enables improved flow-guiding effect of the air curtain device. Applying the air curtain device of such a structure to the vehicle may effectively reduce excessive energy consumption during travel of the vehicle, and facilitate overcoming aerodynamic drag at the front end of the vehicle. Therefore, the air curtain device according to embodiments of the present disclosure further has an advantage of reducing energy consumption of the vehicle.

In some specific implementations, a length of the first channel 1 is greater than a length of the second channel 2; along a direction from the first inlet 11 to the first outlet 12, a curvature radius of a cross section of the first channel 1 gradually increases, and the curvature radius R1 of the cross section of the first channel 1 satisfies: 234 mm ≤ R1 ≤ 916 mm; along a direction from the second inlet 21 to the second outlet 22, a curvature radius of the cross section of the second channel 2 gradually increases, and the curvature radius R2 of the cross section of the second channel 2 satisfies: 545 mm ≤ R2 ≤ 711 mm, which not only ensures a good flow-guiding effect during travel of the vehicle, but also improves the aesthetics of the front face of the vehicle. For example, as shown in FIG. 3, in the first channel 1, along a direction from the first inlet 11 to the first outlet 12, the curvature radius of the cross section of the first channel 1 gradually increases, the curvature radius of the cross section at the first inlet 11 is the smallest and is denoted as R1min, and the curvature radius of the cross section at the first outlet 12 is the largest and is denoted as R1max; in the second channel 2, along a direction from the second inlet 21 to the second outlet 22, the curvature radius of the cross section of the second channel 2 gradually increases, the curvature radius of the cross section at the second inlet 21 is the smallest and is denoted as R2min, and the curvature radius of the cross section at the second outlet 22 is the largest and is denoted as R2max.

In some specific implementations, a sum of a cross-sectional area of the first inlet 11 and a cross-sectional area of the second inlet 21 is greater than a cross-sectional area of the flow convergence outlet 52, so that a gas flow rate at the flow convergence outlet 52 is greater than a gas flow rate at the first inlet 11 and a gas flow rate at the second inlet 21, and the gas is prevented from flowing back at the flow convergence outlet 52 or forming an airflow vortex, which enables improved flow-guiding effect of the air curtain device. Applying the air curtain device of such a structure to the vehicle may effectively reduce excessive energy consumption during travel of the vehicle, facilitate overcoming aerodynamic drag at the front end of the vehicle, and reduce energy consumption of the vehicle.

In some specific implementations, a cross-sectional area of the first inlet 11 is greater than a cross-sectional area of the second inlet 21. According to this structure, the area of the first inlet 11 close to a middle of the vehicle is larger, and the area of the second inlet 21 located on the side is smaller, which not only prevents the gas from flowing back at the flow convergence outlet 52 or forming an airflow vortex, but also ensures a good flow-guiding effect during travel of the vehicle, and also improves the aesthetics of the front face of the vehicle.

In some specific implementations, a width W1 of the first inlet 11 satisfies: 20 mm ≤ W1 ≤ 25 mm; a width W2 of the second inlet 21 satisfies: 20 mm ≤ W2 ≤ 25 mm; the width of the first inlet 11 is greater than the width of the second inlet 21; a width W3 of the flow convergence outlet 52 satisfies: 25 mm ≤ W3 ≤ 30 mm; a height H1 of the first channel 1 satisfies: 130 mm ≤ H1 ≤ 160 mm; and a height H2 of the second channel 2 satisfies: 130 mm ≤ H2 ≤ 160 mm. The present embodiment makes the first channel 1 and the second channel 2 have a horn shape, so that the air curtain device has a better flow-guiding effect. The first channel 1 is relatively closer to an inner side of the front bumper 4, that is, the first channel 1 is relatively closer to the centerline of a vehicle body in a width direction, and the second channel 2 is relatively closer to an outer side of the front bumper 4, that is, the second channel 2 is relatively closer to the front wheel of the vehicle. Since the airflow near the outside position of the front bumper 4 has a tendency to transition to two sides, the second inlet 21 may guide the airflow into the second channel 2 without excessive width, and the direction of the airflow near the inside position of the front bumper 4 is along a plane of the front bumper 4, so the first inlet 11 needs to have a larger width to guide the airflow into the first channel 1, and the width of the first inlet 11 is set to be greater than the width of the second inlet 21, which enables improved flow-guiding effect of the air curtain device. Applying the air curtain device of such a structure to the vehicle may effectively reduce excessive energy consumption during travel of the vehicle, facilitate overcoming aerodynamic drag at the front end of the vehicle, and reduce energy consumption of the vehicle.

In some specific implementations, a gap is defined between the first outlet and the wheel housing liner, and a length L of the gap satisfies 4 mm ≤ L ≤ 10 mm. The first outlet 12 faces the wheel housing liner 3 of the front wheel of the vehicle, and when the airflow flows out from the first outlet 12, the airflow flowing out during the travel of the vehicle may be discharged from the wheel along the wheel housing liner 3 of the front wheel of the vehicle, and significantly disperse the turbulent air near the tire, effectively optimizing the aerodynamic drag during road travel of the whole vehicle.

The front bumper 4 provided by embodiments of the present disclosure includes the curtain air device provided by embodiments of the present disclosure. The front bumper 4 provided by embodiments of the present disclosure has the same advantages as the air curtain device provided by embodiments of the present disclosure.

In some specific embodiments, two air curtain devices are provided, and the two air curtain devices are arranged symmetrically with respect to a centerline of a vehicle body in a width direction. The first channel 1 is arranged closer to the centerline of the vehicle body in the width direction than the second channel 2. Thus, the positive pressure airflow of the front bumper 4 of the vehicle may be guided to the outside of the front wheel to the maximum extent through the two air curtain devices, the pressure difference may be optimized, the airflow separation on two sides of the front bumper may be reduced and the turbulent air on two sides of the wheel may be dispersed to a greater extent, and the drag coefficient may be reduced, which may not only ensure a good flow-guiding effect during the travel of the vehicle, but also improve the aesthetics of the vehicle.

The vehicle provided by embodiments of the present disclosure includes the front bumper 4 provided by embodiments of the present disclosure. The vehicle provided by embodiments of the present disclosure has the same advantages as the front bumper 4 provided by embodiments of the present disclosure.

It should be noted that relational terms such as first and second are used herein only to distinguish one entity or operation from another, and do not necessarily require or imply any such actual relationship or order between those entities or operations. Furthermore, the terms "comprise" or any other variants thereof are intended to cover non-exclusive inclusion, so that a process, method, item, or device that includes a series of elements includes not only those elements, but also other elements that are not explicitly listed, or also includes elements inherent to the process, method, item, or device. If there are no more restrictions, an element defined by the sentence "including a..." does not exclude the existence of other identical elements in the process, method, item or device that includes the element.

## Claims

1. An air curtain device, arranged on two sides of a front bumper, comprising: an air curtain body, the air curtain body having a first channel, a second channel, and a flow convergence channel,
wherein a first inlet and a first outlet are respectively arranged at two ends of the first channel;
a second inlet and a second outlet are respectively arranged at two ends of the second channel;
the flow convergence channel comprises a flow convergence inlet and a flow convergence outlet, and the flow convergence channel is in communication with a wheel housing liner;
the first outlet and the second outlet are in communication with the flow convergence inlet; and
an air curtain channel is formed between the first inlet and the flow convergence outlet, and between the second inlet and the flow convergence outlet.

2. The air curtain device according to claim 1, wherein the first outlet and the second outlet converge, and a cross-sectional area of the first channel gradually decreases along a direction from the first inlet to the first outlet; and
a cross-sectional area of the second channel gradually decreases along a direction from the second inlet to the second outlet.

3. The air curtain device according to claim 1 or 2, wherein a length of the first channel is greater than a length of the second channel;
along a direction from the first inlet to the first outlet, a curvature radius of a cross section of the first channel gradually increases, and the curvature radius R1 of the cross section of the first channel satisfies: 234 mm ≤ R1 ≤ 916 mm; and
along a direction from the second inlet to the second outlet, a curvature radius of a cross section of the second channel gradually increases, and the curvature radius R2 of the cross section of the second channel satisfies: 545 mm ≤ R2 ≤ 711 mm.

4. The air curtain device according to any one of claims 1 to 3, wherein a sum of a cross-sectional area of the first inlet and a cross-sectional area of the second inlet is greater than a cross-sectional area of the flow convergence outlet.

5. The air curtain device according to any one of claims 1 to 4, wherein a cross-sectional area of the first inlet is greater than a cross-sectional area of the second inlet.

6. The air curtain device according to any one of claims 1 to 5, wherein a width W1 of the first inlet satisfies: 20 mm ≤ W1 ≤ 25 mm;
a width W2 of the second inlet satisfies: 20 mm ≤ W2 ≤ 25 mm;
the width of the first inlet is greater than the width of the second inlet;
a width W3 of the flow convergence outlet satisfies: 25 mm ≤ W3 ≤ 30 mm;
a height H1 of the first channel satisfies: 130 mm ≤ H1 ≤ 160 mm; and a height H2 of the second channel satisfies: 130 mm ≤ H2 ≤ 160 mm.

7. The air curtain device according to any one of claims 1 to 6, wherein a gap is defined between the first outlet and the wheel housing liner, and a length L of the gap satisfies 4 mm ≤ L ≤ 10 mm.

8. A front bumper, comprising the air curtain device according to any one of claims 1 to 7.

9. The front bumper according to claim 8, wherein two air curtain devices are provided, and the two air curtain devices are symmetrically arranged with respect to a centerline of a vehicle body in a width direction; and
the first channel is arranged closer to the centerline than the second channel.

10. A vehicle, comprising the front bumper according to claim 8 or 9.
